# EUROPÄISCHE PATENTSCHRIFT

(11) **EP 3 507 148 B1**
(45) Veröffentlichungstag und Bekanntmachung des Hinweises auf die Patenterteilung: **02.06.2021**
(21) Anmeldenummer: 17734989.1
(22) Anmeldetag: 26.06.2017
(51) Int. Cl.: B60T 7/20, B60T 13/66, B60T 13/68

(54) **PNEUMATISCHE BREMSANLAGE FÜR EIN ANHÄNGEFAHRZEUG**
PNEUMATIC BRAKE SYSTEM FOR A TRAILER VEHICLE
SYSTÈME DE FREINAGE PNEUMATIQUE POUR UN VÉHICULE TRACTÉ

(30) Priorität: 02.09.2016 DE 102016010639
(43) Veröffentlichungstag der Anmeldung: 10.07.2019
(73) Patentinhaber: ZF CV Systems Europe BV, 1170 Brussels (BE)
(72) Erfinder: SIEKER, Armin, 33611 Bielefeld (DE); STENDER, Axel, 31787 Hameln (DE); WITTE, Norbert, 31867 Lauenau (DE)
(74) Vertreter: Koschnitzki, Thomas
(86) Internationale Anmeldenummer: PCT/EP2017/000740
(87) Internationale Veröffentlichungsnummer: WO 2018/041382

(56) Entgegenhaltungen:
- EP-A1- 1 386 810
- EP-A2- 2 193 965
- EP-A2- 2 567 874
- DE-A1- 2 339 397
- DE-A1- 3 605 444
- DE-A1- 3 713 138
- DE-A1-102006 028 584
- DE-A1-102011 101 438
- DE-A1-102012 101 871
- FR-A1- 2 228 648
- FR-A1- 2 354 227
- GB-A- 2 074 680

## Beschreibung

Die Erfindung betrifft eine Ventilanordnung zur Belüftung und/oder Entlüftung von Federspeicher-Bremszylindern in einem Anhängefahrzeug mit pneumatischer Bremsanlage, mit einem ersten Anschluss für eine mit einem Vorratsbehälter des Anhängefahrzeugs verbundene Leitung, mit einem zweiten Anschluss für eine zu den Federspeicher-Bremszylindern führende Leitung und mit einem ersten pneumatischen Steuereingang, wobei in Abhängigkeit vom Druck am Steuereingang der erste Anschluss mit dem zweiten Anschluss verbindbar ist. Daneben betrifft die Erfindung eine pneumatische Bremsanlage, ein Anhängefahrzeug mit einer pneumatischen Bremsanlage, eine Ventileinheit sowie ein Verfahren zum Betreiben einer pneumatischen Bremsanlage für ein Anhängefahrzeug.

Die pneumatische Bremsanlage eines Anhängefahrzeugs wird typischerweise über zwei pneumatische Leitungen mit einem Zugfahrzeug verbunden. Eine Leitung führt Steuerdruck über einen Steueranschluss zum Anhängefahrzeug. Die andere Leitung führt Vorratsdruck über einen Versorgungsanschluss zum Anhängefahrzeug. Aufgrund gesetzlicher Regelungen in Deutschland und in weiteren Ländern weist der Steueranschluss einen gelben Kupplungskopf auf und der Versorgungsanschluss einen roten Kupplungskopf.

Integriert ist eine Sicherheitsfunktion bei Abriss der Leitung für den Vorratsdruck. Hierzu wird der Druck in der Leitung überwacht. Bei zu großem Druckabfall wird das Anhängefahrzeug automatisch durch Federspeicherbremsen eingebremst.

Das Anhängefahrzeug weist einen Vorratsbehälter für Druckluft auf, der über den Versorgungsanschluss gespeist wird. Dadurch kann das Anhängefahrzeug mehrfach kurz hintereinander gebremst werden, ohne dass die hierfür erforderliche Druckluft zeitgleich über den Versorgungsanschluss zugeführt werden muss.

Moderne pneumatische Bremsanlagen weisen kombinierte Bremszylinder auf, nämlich mit Membran-Betriebsbremszylinder und Federspeicher-Bremszylinder in einer gemeinsamen Baugruppe. Dies hat den Vorteil, dass Bremskolben, Bremshebel und Bremsscheiben oder Bremstrommeln nur einmal je Baugruppe vorhanden sein müssen. Lediglich Federspeicher-Bremszylinder und Betriebsbremszylinder sind nebeneinander je Baugruppe vorhanden. Derartige kombinierte Bremszylinder werden auch als Tristop-Zylinder bezeichnet.

Zur Vermeidung mechanischer Überlastungen sollen Federspeicher-Bremszylinder und Betriebsbremszylinder nicht zugleich Bremskraft ausüben. So wirken nach einem Druckabfall am Versorgungsanschluss oder in den anschließenden Leitungen die Kräfte von Federspeichern innerhalb der Bremsen. Wenn nun zusätzlich die Betriebsbremsen durch einen Fahrer aktiviert werden, weil noch ausreichender Druck im Vorratsbehälter vorhanden ist, wirken innerhalb der Bremsen zusätzlich die aus der Betätigung der Betriebsbremszylinder resultierenden Kräfte. Es kommt zu einer Kräfteaddition, die eine Beschädigung oder gar Zerstörung von Bauteilen bewirken kann.

Die additive Betätigung von Federspeicherbremsen und Betriebsbremsen kann auch beim normalen Parken des Anhängefahrzeugs auftreten. Die Federspeicherbremsen sind zugleich Parkbremsen. Sind die Parkbremsen aktiviert und werden die Betriebsbremsen durch den Fahrer zusätzlich betätigt, kommt es ebenfalls zu der oben angesprochenen Kräfteaddition.

Benötigt wird ein Überlastschutz zur Vermeidung der genannten Beschädigungen oder Zerstörungen.

In der EP 2 190 706 B1 ist eine Ventilanordnung für die automatische Einbremsung eines Anhängefahrzeugs über die Federspeicherbremsen bei Abriss der Vorratsleitung offenbart. Die Belüftung der Federspeicher-Bremszylinder erfolgt entweder durch den Druck im Vorratsbehälter oder durch Betriebsbremsdruck. Die Umsteuerung zwischen den beiden genannten Drücken erfolgt über einen Steuereingang. Dieser führt im Normalfall Druck aus einer an den Versorgungsanschluss anschließenden Leitung.

Die nachveröffentlichte WO 2016/198153 A1 offenbart eine Ventilanordnung zur Belüftung von Federspeicher-Bremszylindern in einem Anhängefahrzeug mit pneumatischer Bremsanlage, mit einem ersten Anschluss für eine mit einem Vorratsbehälter des Anhängefahrzeugs verbundene Leitung, mit einem zweiten Anschluss für eine zu den Federspeicher-Bremszylindern führende Leitung, und mit einem ersten pneumatischen Steuereingang, wobei in Abhängigkeit vom Druck am ersten Steuereingang der erste Anschluss mit dem zweiten Anschluss verbindbar ist, und wobei der erste Steuereingang an eine mit einem Steueranschluss des Anhängefahrzeugs verbundene Leitung oder an eine mit dem Vorratsbehälter verbundene Leitung angeschlossen ist.

In der DE 37 13 138 A1 ist eine Ventilanordnung mit einem Zwei-Wege-Ventil offenbart, welches eine Addition der Belüftung von Federspeicherventil und Betriebsbremsventil verhindern soll. Dabei ist ein Steuereingang an eine Leitung für Vorratsdruckluft angeschlossen.

Die DE 10 2012 101 871 A1 offenbart eine Parkbremsventileinrichtung zur Steuerung des Betriebszustands einer Federspeicher-Feststellbremse. Ein Steueranschluss/Versorgungsanschluss ist über ein Löseventil mit dem Kupplungskopf "Vorrat" verbunden.

In der DE 23 39 397 A1 ist ein Anhängerbremsventil mit Schutzventil und zur Ansteuerung von Federspeicher-Bremszylinder und Betriebsbremszylinder dargestellt. Die EP 1 386 810 A1 offenbart ein Kombiventil für Anhängefahrzeuge mit Feststellbremse und Kombizylinder hierfür.

Aufgabe der vorliegenden Erfindung ist die Schaffung einer Ventilanordnung und Bremsanlage mit einem neuen, insbesondere verbesserten Überlastschutz.

Eine erfindungsgemäße Ventilanordnung weist die Merkmale des Anspruchs 1 auf, nämlich eine Ventilanordnung zur Belüftung und/oder Entlüftung von Federspeicher-Bremszylindern in einem Anhängefahrzeug mit pneumatischer Bremsanlage, mit einem ersten Anschluss für eine mit einem Vorratsbehälter des Anhängefahrzeugs verbundene Leitung, mit einem zweiten Anschluss für eine zu den Federspeicher-Bremszylindern führende Leitung und mit einem ersten pneumatischen Steuereingang, wobei in Abhängigkeit vom Druck am ersten Steuereingang und unabhängig vom Druck in den Betriebsbremszylindern der erste Anschluss mit dem zweiten Anschluss verbindbar ist, wobei der erste Steuereingang an eine mit einem Steueranschluss des Anhängefahrzeugs verbundene Leitung angeschlossen ist. Vorgesehen ist, dass der erste Steuereingang zum Anschluss an eine mit einem Steueranschluss des Anhängefahrzeugs verbundene Leitung angeschlossen ist. Über den Druck am Steuereingang wird die Zufuhr von Druckluft aus dem Vorratsbehälter zu den Federspeicher-Bremszylindern, also die Belüftung derselben geregelt. Erfindungsgemäß kann die Regelung in Abhängigkeit vom Druck am Steueranschluss erfolgen. Besonders vorteilhaft ist die Verbindung des Steuereingangs mit einer an den Steueranschluss angeschlossenen Leitung. Der am Steueranschluss anliegende Steuerdruck beeinflusst dann die Belüftung der Federspeicher-Bremszylinder und sorgt so für die Vermeidung einer Überlast in den Bremsen.

Vorteilhafterweise ist der erste Anschluss mit dem zweiten Anschluss verbunden, wenn in der an den Steuereingang angeschlossenen Leitung ein Druck oberhalb eines Grenzwertes vorliegt. Bei Überschreitung des Grenzwertes sind die beiden Anschlüsse miteinander verbunden, anderenfalls nicht oder nur teilweise. Diese Art der Regelung ist besonders einfach und kann beispielsweise realisiert werden durch ein Ventil, in dem ein Kolben durch den Steuerdruck gegen den Druck einer Feder verschiebbar ist. Bei Überschreitung des Grenzwertes am Steuereingang werden somit die Federspeicher-Bremszylinder belüftet. Umgekehrt werden die Federspeicher-Bremszylinder vorzugsweise wieder entlüftet, sobald der Druck am Steuereingang den Grenzwert wieder unterschreitet.

Nach einem weiteren Gedanken der Erfindung weist die Ventilanordnung einen dritten Anschluss als Entlüftung auf, wobei der zweite Anschluss mit dem dritten Anschluss oder mit dem ersten Anschluss verbindbar ist. Die Entlüftung der Federspeicher-Bremszylinder erfolgt dann über den dritten Anschluss der Ventilanordnung. Dies ermöglicht eine einfache Steuerung und einen einfachen Aufbau.

Nach einem weiteren Gedanken der Erfindung weist die Ventilanordnung einen zweiten pneumatischen Steuereingang auf, welcher an eine mit dem Versorgungsanschluss verbundene Leitung angeschlossen ist. Dabei ist der erste Anschluss mit dem zweiten Anschluss auch in Abhängigkeit vom Druck am zweiten Steuereingang verbindbar. Die Belüftung der Federspeicher-Bremszylinder ist somit über beide pneumatische Steuereingänge regelbar.

Vorteilhafterweise ist der erste Anschluss mit dem zweiten Anschluss verbunden, wenn wenigstens einer der beiden Steuereingänge mit einem Druck oberhalb eines Grenzwerts beaufschlagt ist. Die beiden Steuereingänge wirken im Sinne einer ODER - Schaltung. Nur wenn keiner der beiden Steuereingänge mit Druck beaufschlagt ist, sind der erste Anschluss und der zweite Anschluss nicht miteinander verbunden bzw. werden die Federspeicher-Bremszylinder nicht belüftet.

Nach einem weiteren Gedanken der Erfindung ist vorgesehen, dass die Ventilanordnung ein Mehr-Wege-Ventil mit mindestens zwei Schaltstellungen aufweist, und dass erster Steuereingang, erster Anschluss und zweiter Anschluss dem Mehr-Wege-Ventil zugeordnet sind. Vorzugsweise handelt es sich um ein 3/2-Wege-Ventil. Die beiden Anschlüsse sind vorzugsweise Bestandteile des Mehr-Wege-Ventils.

Nach einem weiteren Gedanken der Erfindung ist ein dritter Anschluss als Entlüftungsanschluss dem Mehr-Wege-Ventil zugeordnet. Vorzugsweise ist der Entlüftungsanschluss Bestandteil des Mehr-Wege-Ventils.

Vorteilhafterweise ist ein zweiter Steuereingang dem Mehr-Wege-Ventil zugeordnet. Dabei ist der zweite Steuereingang vorzugsweise Bestandteil des Ventils und insbesondere an eine mit dem Versorgungsanschluss des Anhängefahrzeugs verbundene Leitung angeschlossen.

Als definierte Grenzwerte für die Drücke an den Steuereingängen sind vorzugsweise 2,5 bar oder mehr vorgesehen. Möglich sind auch unterschiedliche Grenzwerte der Drücke an den beiden Steuereingängen.

Nach einem weiteren Gedanken der Erfindung weist die Ventilanordnung folgende Merkmale auf:
a) am ersten Steuereingang liegen entweder ein Druck aus der mit vom Steueranschluss kommenden Leitung oder ein Druck aus der vom Vorratsbehälter kommenden Leitung an,
b) an einem zweiten Steuereingang liegt ein Vorratsdruck aus einer Vorratsdruckleitung an,
c) am ersten Anschluss liegt der Druck aus der vom Vorratsbehälter kommenden Leitung an,
d) am zweiten Anschluss liegt der Druck aus der zu den Federspeicher-Bremszylindern führenden Leitung an,
e) ein dritter Anschluss ist zum Entlüften vorgesehen,
f) die Ventilanordnung ist derart konfiguriert, dass
   - bei Überschreitung eines Grenzwerts des Drucks am zweiten Steuereingang und Unterschreitung eines Grenzwerts des Drucks am ersten Steuereingang der erste Anschluss mit dem zweiten Anschluss verbunden ist (Fahrtstellung),
   - bei Unterschreitung eines definierten Grenzwerts des Drucks am ersten Steuereingang und Unterschreitung eines definierten Grenzwerts des Drucks am zweiten Steuereingang der zweite Anschluss mit dem dritten Anschluss verbunden ist und der erste Anschluss gesperrt ist (automatische Einbremsung und Parkstellung),
   - bei Überschreitung eines definierten Grenzwerts des Drucks am ersten Steuereingang und insbesondere Unterschreitung eines definierten Grenzwerts des Drucks am zweiten Steuereingang der erste Anschluss mit dem zweiten Anschluss verbunden ist (Überlastschutz).

Nach einem weiteren Gedanken der Erfindung weist die Ventilanordnung folgende Merkmale auf:
a) ein Park-/Löseventil,
b) die Ventilanordnung beinhaltet ein Mehr-Wege-Ventil mit mindestens zwei Schaltstellungen, wobei die Ventilanordnung die Federspeicher-Bremszylinder in einer ersten Schaltstellung entlüftet und in einer zweiten Schaltstellung über ein Rückschlagventil die Leitung zum Vorratsbehälter mit den Federspeicher-Bremszylindern verbindet,
c) der erste Steuereingang ist über ein weiteres Schaltelement mit der Leitung zum Steueranschluss oder mit der Leitung zum Vorratsbehälter verbindbar,
d) ein zweiter Steuereingang ist über das Park-/Löseventil mit einer Vorratsdruckleitung zum Versorgungsanschluss oder mit einer Leitung zum Vorratsbehälter oder mit einer Entlüftung verbindbar,
e) das Mehr-Wege-Ventil schaltet in die zweite Schaltstellung, wenn zumindest einer der Steuereingänge einen Druck führt, der einen Grenzwert überschreitet,
f) das Mehr-Wege-Ventil schaltet in die erste Schaltstellung, wenn beide Steuereingänge drücke führen, die Grenzwerte unterschreiten.

Vorteilhafterweise ist das weitere Schaltelement Teil eines Anhängerbremsmoduls. Insbesondere ist das weitere Schaltelement ein sogenanntes Redundanzventil. Mit dem weiteren Schaltelement ist die Aktivierung einer Notbremsfunktion mit Überlastschutz auf anderem Wege möglich. Bei ausreichendem Druck im Vorratsbehälter werden im Fall einer durch Druckabfall ausgelösten Notbremsung die Federspeicher-Bremszylinder wieder belüftet und so die Federspeicher-Bremsen gelöst. Stattdessen können die Betriebsbremsen vom elektronischen Bremssystem angesteuert werden. Dabei kann auch die üblicherweise vorhandene Antiblockierregelung wirksam sein.

Nach einem weiteren Gedanken der Erfindung beinhaltet die Ventilanordnung ein Select-High-Ventil mit zwei oder mehr Steuereingängen. In einem Select-High-Ventil steuert der jeweils höhere Druck in den Steuereingängen die Funktion des Ventils oder der Ventilanordnung.

Nach einem weiteren Gedanken der Erfindung ist eine Ventileinheit zur Belüftung der Federspeicher-Bremsen vorgesehen, mit einem ersten Kolben, einem ersten Zylinderraum, einem zweiten Kolben und einem zweiten Zylinderraum, wobei der erste Zylinderraum den ersten Steuereingang aufweist, wobei die Kolben koaxial zueinander gehalten und bewegbar sind, wobei der zweite Zylinderraum zwischen den beiden Kolben vorgesehen ist und einen zweiten Steuereingang für den Druck aus einer mit dem Versorgungsanschluss verbundenen Leitung aufweist, und wobei einer der Kolben einen Fortsatz aufweist, welcher in den zweiten Zylinderraum hineinragt. Im Bereich des Fortsatzes ergibt sich eine ringförmige Gestalt des zweiten Zylinderraumes, nämlich um den Fortsatz herum. Dadurch weisen die beiden Kolben stets einen Mindestabstand zueinander auf und der zweite Zylinderraum enthält ein Mindestvolumen. Der Fortsatz kann so Kraft vom ersten Kolben auf den zweiten Kolben übertragen und ist vorzugsweise Teil des ersten Kolbens.

Der zweite Steuereingang für den Vorratsdruck ist am zweiten Zylinderraum so positioniert, dass er von keinem der beiden Kolben blockierbar ist. Der zweite Kolben wird vom ersten Zylinderraum wegbewegt, entweder durch den ersten Kolben bei ausreichendem Druck im ersten Zylinderraum oder durch ausreichenden Druck im zweiten Zylinderraum. Der zweite Kolben regelt die Verbindung oder Sperrung zwischen drei Anschlüssen, nämlich einem ersten Anschluss für eine Leitung zum Vorratsbehälter, einem zweiten Anschluss für Leitungen zu den Federspeicherbremsen und einem dritten Anschluss für eine Entlüftung.

Gegenstand der Erfindung ist auch eine Ventileinheit zur Belüftung von Federspeicher-Bremszylindern einer pneumatischen Bremsanlage, insbesondere nach Art eines 3/2-Wege-Ventils, mit einem ersten Anschluss, einem zweiten Anschluss und einem dritten Anschluss an einem Gehäuse, wobei eine Verbindung vom ersten Anschluss zum zweiten Anschluss umsteuerbar ist zu einer Verbindung vom ersten Anschluss zum dritten Anschluss, mit einem ersten Kolben zwischen einem ersten Zylinderraum und einem zweiten Zylinderraum im Gehäuse, wobei der erste Zylinderraum einen ersten Steuereingang und der zweite Zylinderraum einen zweiten Steuereingang aufweisen, und mit einem zweiten Kolben zwischen dem zweiten Zylinderraum und einem Zylinderraum, wobei einer der beiden Kolben einen Fortsatz aufweist, welcher in den zweiten Zylinderraum ragt. Die Umsteuerung der Ventileinheit wird über beide Steuereingänge beeinflusst.

Gegenstand der Erfindung ist auch eine pneumatische Bremsanlage und ein Anhängefahrzeug mit einer pneumatischen Bremsanlage.

Schließlich ist Gegenstand der Erfindung auch ein Verfahren zum Betreiben einer pneumatischen Bremsanlage für ein Anhängefahrzeug, gemäß den Merkmalen des Anspruchs 20. Danach ist vorgesehen, dass die Bremsanlage Steueranschluss, Versorgungsanschluss, Betriebsbremsen, Federspeicherbremsen, einen Vorratsbehälter und eine Ventilanordnung mit pneumatischem Steuereingang aufweist, wobei in Abhängigkeit vom Druck am Steuereingang Federspeicher-Bremszylinder aus dem Vorratsbehälter belüftet werden. Dabei ist der Druck am Steuereingang vom Druck am Steueranschluss oder vom Druck im Vorratsbehälter abgeleitet. Die Belüftung der Federspeicher-Bremszylinder erfolgt aus dem Vorratsbehälter, jedoch in Abhängigkeit vom Druck am Steueranschluss. Vorzugsweise kommt es dabei darauf an, ob der Druck am Steuereingang einen definierten Grenzwert überschreitet oder unterschreitet. Im einfachsten Fall stimmt der Druck am Steuereingang mit dem Druck am Steueranschluss überein. Es können aber auch abweichende Drücke am Steuereingang anliegen, die vom Druck am Steueranschluss abhängig sind oder sich aus diesen Drücken ergeben. Dies gilt auch für die oben im Zusammenhang mit der Bremsanlage genannten Drücke. Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
Fig. 1 ein Doppelkolben-Ventil für eine pneumatische Bremsanlage eines Anhängefahrzeugs in Fahrtstellung,
Fig. 2 das Doppelkolben-Ventil in der Stellung für eine automatische Einbremsung,
Fig. 3 das Doppelkolben-Ventil in der Stellung für einen Überlastschutz,
Fig. 4 die pneumatische Bremsanlage mit dem Doppelkolben-Ventil in Fahrtstellung,
Fig. 5 die pneumatische Bremsanlage mit dem Doppelkolben-Ventil in der Stellung für eine automatische Einbremsung,
Fig. 6 die pneumatische Bremsanlage mit dem Doppelkolben-Ventil in Parkstellung,
Fig. 7 die pneumatische Bremsanlage mit dem Doppelkolben-Ventil in der Stellung für einen Überlastschutz,
Fig. 8 die pneumatische Bremsanlage mit einem Select-High-Ventil in Fahrtstellung,
Fig. 9 die pneumatische Bremsanlage mit dem Select-High-Ventil in der Stellung für eine automatische Einbremsung,
Fig. 10 die pneumatische Bremsanlage mit Select-High-Ventil in Parkstellung,
Fig. 11 die pneumatische Bremsanlage mit dem Select-High-Ventil in der Stellung für einen Überlastschutz,
Fig. 12 die pneumatische Bremsanlage mit dem Doppelkolben-Ventil und einem eingeschalteten Blockierschutz.

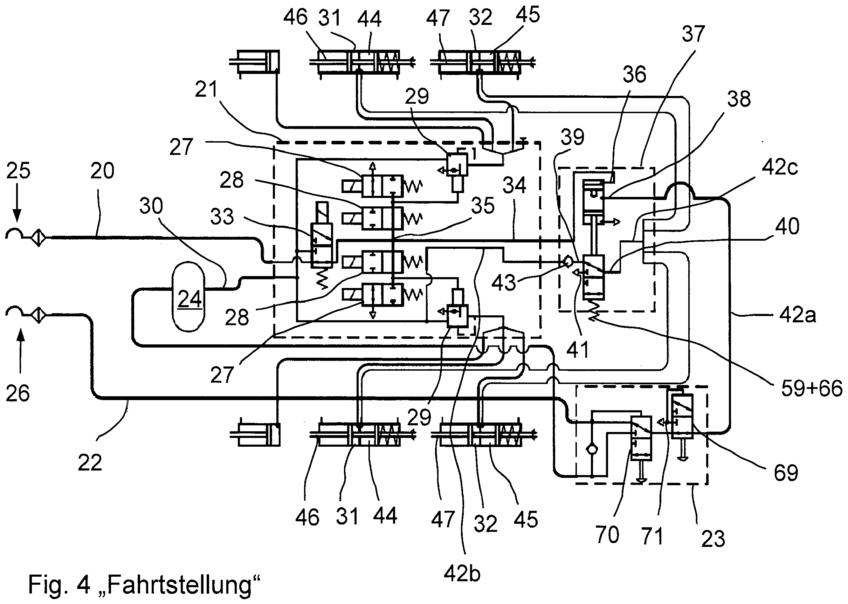

Es wird zunächst Bezug genommen auf Fig. 4 mit der Darstellung einer pneumatischen Bremsanlage für ein Anhängefahrzeug. Eine Steuerdruckleitung 20 führt zu einem Anhängerbremsmodul 21. Eine Vorratsdruckleitung 22 führt zu einem Parklöseventil 23 und von diesem weiter über einen Vorratsbehälter 24 zum Anhängerbremsmodul 21. Entsprechend der gesetzlichen Vorschriften weist die Steuerdruckleitung 20 einen gelben Kupplungskopf 25 für einen Steueranschluss auf und die Vorratsdruckleitung 22 einen roten Kupplungskopf 26 für einen Versorgungsanschluss.

Das Anhängerbremsmodul 21 ist in bekannter Weise aufgebaut, nämlich je Fahrzeugseite mit zwei Magnetventilen 27, 28 und einem Relaisventil 29. Über die Magnetventile 27, 28 wird die Zufuhr des Steuerdrucks zu den Relaisventilen 29 geregelt. Letztere sind über eine Leitung 30 mit Verzweigungen zugleich an Vorratsbehälterdruck aus dem Vorratsbehälter 24 angeschlossen und geben ausgesteuerten Betriebsbremsdruck an Betriebsbremszylinder 31, 32 ab.

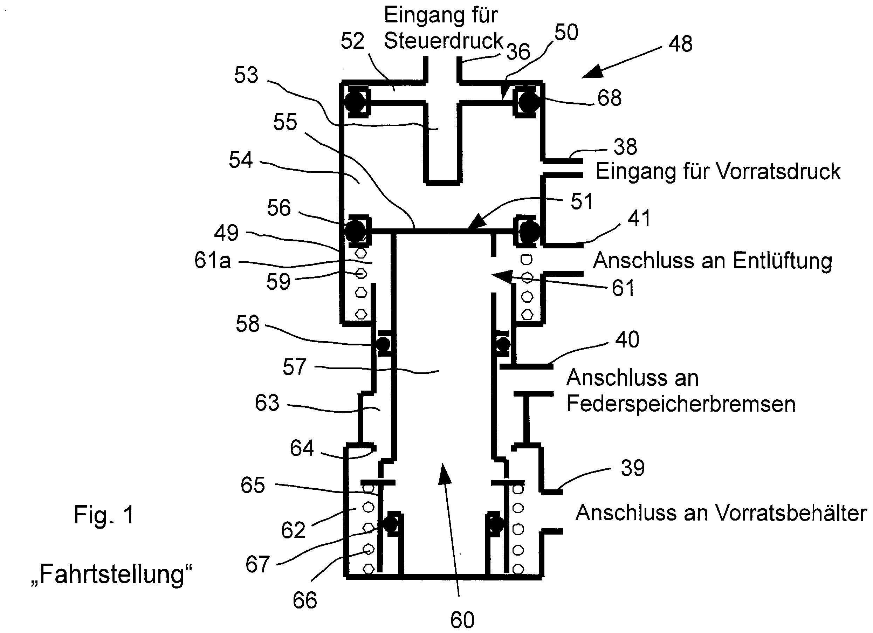

Weiterer Bestandteil des Anhängerbremsmoduls 21 ist ein Redundanzventil 33 als Magnetventil, mit dem die Verbindung zwischen der Steuerdruckleitung 20 und einer Leitung 34 trennbar und umstellbar ist. Auf diese Weise kann die Leitung 34 alternativ mit der Leitung 30 und dem Vorratsbehälterdruck aus dem Vorratsbehälter 24 verbunden werden. Die Leitung 34 verbindet außerdem über einen Abzweig 35 die Magnetventile 28 beider Fahrzeugseiten miteinander. Weiterhin verbindet die Leitung 34 (bei entsprechend geschaltetem Redundanzventil 33) die Steuerdruckleitung 20 mit einem ersten Steuereingang 36 einer Ventilanordnung 37. Die Ventilanordnung 37 hat insbesondere die Funktion eines Überlastschutzes und weist hierzu noch einen zweiten Steuereingang 38 sowie einen ersten Anschluss 39, einen zweiten Anschluss 40 und einen dritten Anschluss 41 auf, siehe auch Fig. 1 bis 3.

Der zweite Steuereingang 38 ist über eine Leitung 42a und das Parklöseventil 23 an die Vorratsdruckleitung 22 angeschlossen. Der erste Anschluss 39 ist über eine Leitung 42b, ein Rückschlagventil 43 und das Anhängerbremsmodul 21 mit dem Vorratsbehälter 24 verbunden. Der zweite Anschluss 40 ist über eine Leitung 42c und Verzweigungen mit Federspeicher-Bremszylindern 44, 45 beider Fahrzeugseiten verbunden. Der dritte Anschluss 41 ist ein Entlüftungsanschluss.

In der gezeigten Bremsanlage sind die Betriebsbremszylinder 31, 32 Bestandteile sogenannter Kombizylinder, nämlich mit integrierten Federspeicher-Bremszylindern 44, 45, wobei die Kräfte beim Betätigen der Betriebsbremse einerseits und von Federspeichern andererseits auf denselben Bremskolben 46, 47 wirken.

Die Ventilanordnung 37 beinhaltet eine Ventileinheit 48 nach Art eines Doppelkolben-Ventils, siehe Fig. 1-3, hier mit einem Gehäuse 49, in dem zum Steuern der Ventilfunktionen zwei Kolben 50, 51 koaxial bewegbar sind. In einem oberen, ersten Zylinderraum 52 ist der erste Kolben 50 durch über den Steuereingang 36 zugeführten Steuerdruck abwärts in Richtung auf den zweiten Kolben 51 bewegbar. Dabei weist der erste Kolben 50 einen abwärtsgerichteten Fortsatz 53 mit verringertem Durchmesser auf, so dass um den Fortsatz 53 und darunter ein zweiter Zylinderraum 54 gebildet ist. Der zweite Steuereingang 38 führt in den zweiten Zylinderraum 54 zwischen den beiden Kolben 50, 51. Durch den Fortsatz 53 weisen die beiden Kolben 50, 51 stets einen Mindestabstand zueinander auf, so dass der zweite Steuereingang 38 durch die Kolben 50, 51 nicht verschließbar ist.

Der zweite Kolben 51 ist gestuft ausgebildet, mit einem breiten Kopf 55 mit Dichtung 56 und einem schmaleren Fortsatz 57 mit Dichtung 58. Der Kopf 55 liegt randseitig an einer Druckfeder 59 an, die den zweiten Kolben 51 in Richtung auf den ersten Kolben 50 drückt.

Der Fortsatz 57 des zweiten Kolbens 51 ist hohl und nach unten mit einer Öffnung 60 sowie nahe dem Kopf 55 auch seitlich mit einer Öffnung 61 versehen. Die beiden Öffnungen 60, 61 sind außenseitig durch die Dichtung 58 gegeneinander abgeschlossen bzw. voneinander getrennt. Im Bereich der Öffnung 61 ist um den Fortsatz 57 herum ein Ringraum 61a gebildet, welcher zusätzlich zur Öffnung 61 noch den dritten Anschluss 41 als Öffnung aufweist und im Übrigen durch die Dichtungen 56, 58 abgeschlossen ist.

Das Gehäuse 49 weist in seinem unteren Bereich einen breiteren untersten, ringförmigen Zylinderraum 62 und darüber einen etwas schmaleren, ringförmigen Zylinderraum 63 auf. Der zweite Anschluss 40 ist zugleich eine Öffnung des Zylinderraums 63 und der erste Anschluss 39 ist eine Öffnung des Zylinderraums 62.

An einem Übergang zwischen den beiden Zylinderräumen 62, 63 ist eine innen umlaufende Kante 64 gebildet, gegen die ein im untersten Zylinderraum 62 gehaltener Hilfskolben 65 mittels einer Druckfeder 66 aufwärts drückt. Die Druckfeder 66 ist relativ schwach ausgebildet und bewirkt lediglich, dass der Hilfskolben 65, sofern nicht weitere Kräfte wirken, an der umlaufenden Kante 64 anliegt und dort den untersten Zylinderraum 62 abschließt. Der Hilfskolben 65 ist vorzugsweise an beiden axialen Enden offen und innenseitig auf einer Dichtung 67 geführt.

Der erste Kolben 50 weist außenseitig eine umlaufende Dichtung 68 auf. Der Fortsatz 57 des zweiten Kolbens 51 ist im Zylinderraum 63 mit der außenseitigen Dichtung 58 geführt.

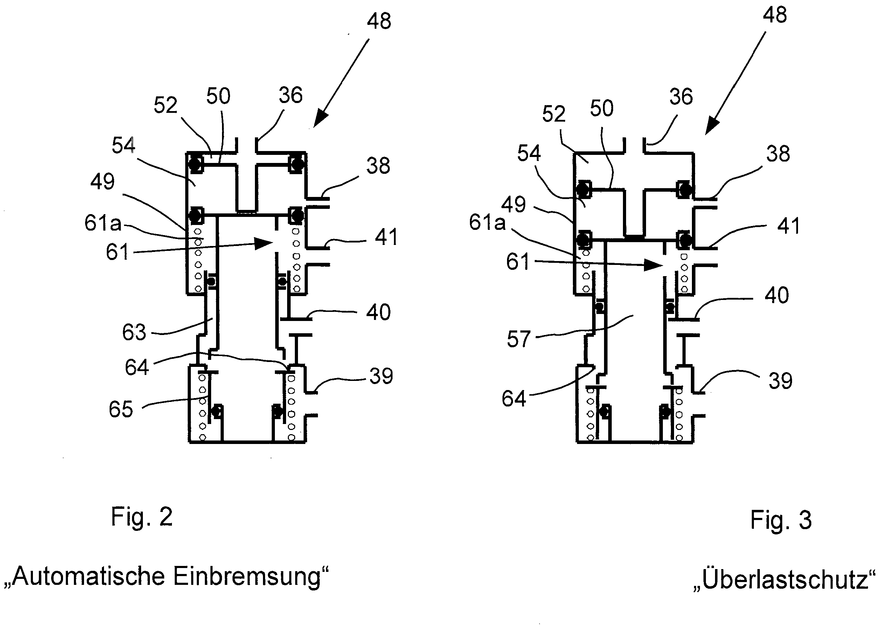

Die Richtungsangaben "oben" und "unten" beziehen sich auf die Ausrichtung der Ventileinheit 48 in den Figuren. In der Praxis kann die Ventileinheit 48 eine andere Lage einnehmen, so dass die Richtungsangaben anzupassen sind. Die Ventileinheit 48 ist hier als 3/2-Wegeventil ausgeführt, mit einer oberen Schaltstellung in den Figuren 2, 5, 6 und einer unteren Schaltstellung in den Fig. 1,3,4,7.

Durch die Konstruktion der Ventileinheit 48 sind die Funktionen der in Fig. 4 sichtbaren Ventilanordnung 37 in einem Gehäuse (im Gehäuse 49) vereint. Nachfolgend werden die Funktionen der Ventilanordnung 37 anhand der Fig. 4 - 7 erläutert:
In Fahrtstellung gemäß Fig. 4 ist die pneumatische Bremsanlage in Bereitschaft. Das heißt, die Federspeicher-Bremszylinder 44, 45 sind durch Vorratsbehälterdruck aus dem Vorratsbehälter 24 belüftet. Hierzu ist der erste Anschluss 39 mit dem zweiten Anschluss 40 über die Ventilanordnung 37 verbunden. Die Ventilanordnung 37 befindet sich in einer aktiv geschalteten, zweiten Schaltstellung. Ausgelöst ist diese zweite Schaltstellung durch den am zweiten Steuereingang 38 anliegenden Vorratsdruck von mindestens 2,5 bar auf der Vorratsdruckleitung 22. Der Vorratsdruck wird hierzu von der Vorratsdruckleitung 22 durch das Parklöseventil 23 und durch die Leitung 42a bis zum zweiten Steuereingang 38 geführt. Der dort anliegende Vorratsdruck beaufschlagt den zweiten Kolben 51, so dass die Ventileinheit 48 die Fahrtstellung gemäß Fig. 1 einnimmt. Dabei liegt am ersten Steuereingang 36 kein Druck an, der erste Kolben 50 wird nicht beaufschlagt und befindet sich in seiner oberen Stellung. Da außerdem kein Steuerdruck aus der Steuerdruck-Leitung 20 anliegt, sind auch die Bremszylinder 30, 31, 32 unbelüftet.

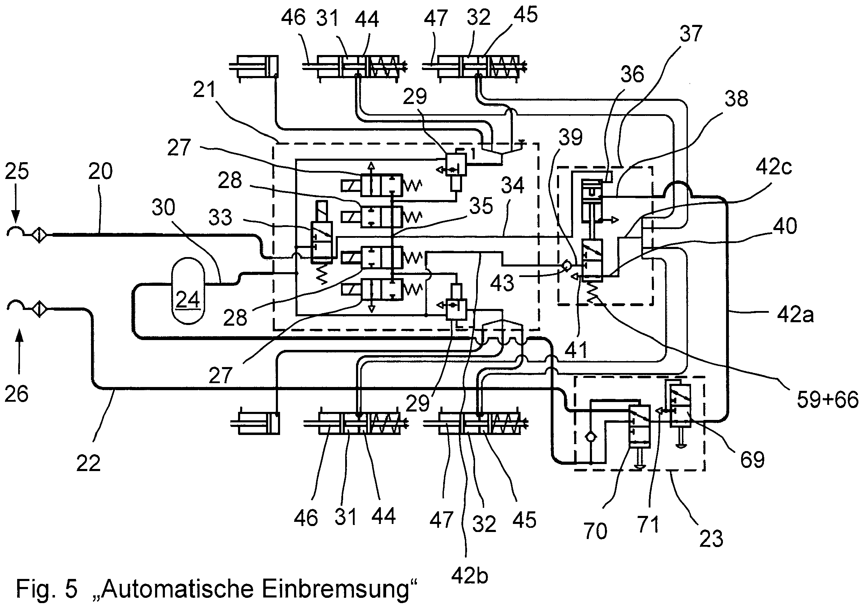

Fig. 5 zeigt die Bestandteile der pneumatischen Bremsanlage nach einer automatischen Einbremsung des Anhängefahrzeugs durch Verlust des Vorratsdrucks in der Vorratsdruckleitung 22, etwa durch Abriss des roten Kupplungskopfes 26. Drucklos ist dann auch der zweite Steuereingang 38, ebenso der erste Steuereingang 36 ohne Betätigung der Betriebsbremsen. Entsprechend sind beide Zylinderräume 52, 54 entlüftet und beide Kolben 50, 51 durch Druck der Feder 59 nach oben bewegt, siehe auch Fig. 2. Im Gegensatz zu Fig. 4 befindet sich in Fig. 5 die Ventilanordnung 37 in einer oberen Schaltstellung. Der erste Anschluss 39 ist abgesperrt. Der zweite Anschluss 40 ist zur Entlüftung der Federspeicher-Bremszylinder 44, 45 mit dem dritten Anschluss 41 verbunden. Die Federspeicher-Bremszylinder 44, 45 sind entlüftet und das Anhängefahrzeug wird abgebremst oder ist eingebremst. Die Betriebsbremsen sind inaktiv.

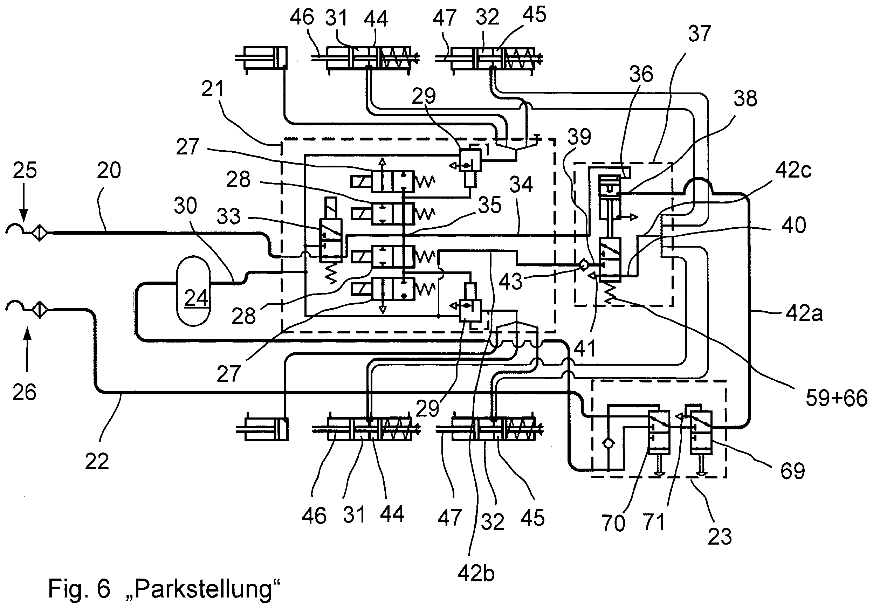

In Fig. 6 ist eine Parkstellung der pneumatischen Bremsanlage gezeigt. Die Ventilanordnung 37 nimmt dieselbe Schaltstellung ein wie in Fig. 5 beim automatischen Einbremsen nach Verlust des Vorratsdrucks in der Vorratsdruckleitung 22. In Fig. 6 kann der Vorratsdruck jedoch weiterhin in der Vorratsdruckleitung 22 vorhanden sein. Der Druckverlust am zweiten Steuereingang 38 wird stattdessen erzielt durch Umschaltung des Parklöseventils 23. Dieses beinhaltet zumindest zwei Ventile, nämlich ein Parkventil 69 und ein Löseventil 70. Das Löseventil 70 befindet sich in allen hier dargestellten Zuständen in der gleichen Schaltposition. Demgegenüber befindet sich das Parkventil 69 in den Fig. 4 und 5 in einer Fahrtstellung und nur in Fig. 6 in einer Parkstellung. Dadurch ist der zweite Steuereingang 38 mit einer Entlüftung 71 am Parkventil 69 verbunden und somit drucklos. Die Betriebsbremse ist inaktiv. Der erste Steuereingang 36 ist ebenfalls drucklos. Die Zylinderräume 52, 54 sind entlüftet. Die Ventilanordnung nimmt dieselbe Stellung ein wie beim automatischen Einbremsen in Fig. 5. Dadurch ist der zweite Anschluss 40 mit dem dritten Anschluss 41 zur Entlüftung der Federspeicher-Bremszylinder verbunden. Das Fahrzeug ist gebremst.

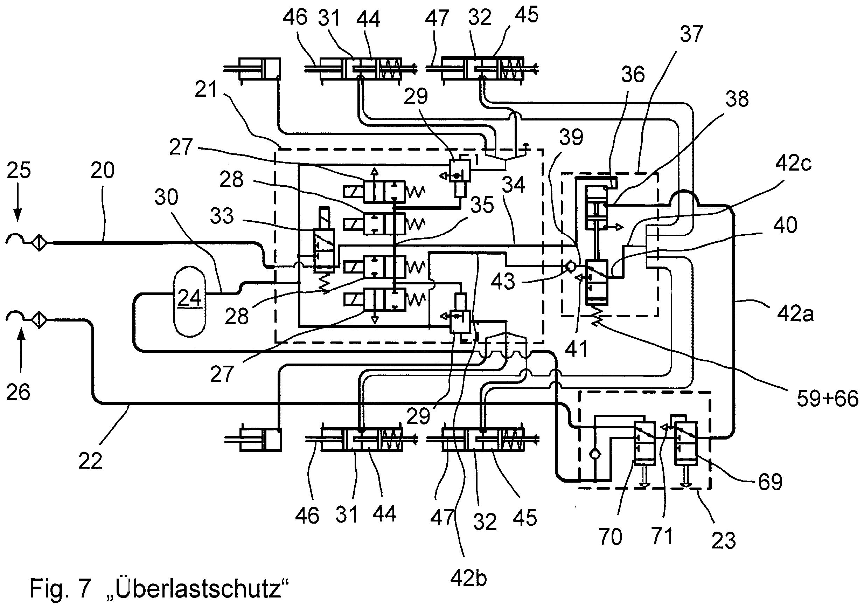

In Fig. 7 ist die Funktion der Ventilanordnung 37 als Überlastschutz erkennbar. Vermieden werden soll eine Doppelbelastung innerhalb der Betriebsbremszylinder 30, 31 und 32 durch Betätigung der Betriebsbremse einerseits und durch die Kraft der entlüfteten Federspeicher-Bremszylinder 44, 45 andererseits. Ausgegangen wird von der Parkstellung gemäß Fig. 6 mit geschaltetem Parkventil 69. Gemäß Fig. 7 liegt zusätzlich Steuerdruck in der Steuerdruck-Leitung 20 an. Dieser regelt über die Magnetventile 27, 28 und Relaisventile 29 die Zufuhr des Vorratsbehälterdrucks aus dem Vorratsbehälter 24 zu den Betriebsbremszylindern 31, 32. Je mehr Steuerdruck eingesteuert wird, umso höher sind die zusätzlichen mechanischen Kräfte innerhalb der Betriebsbremszylinder 31, 32. Da die Federspeicher-Bremszylinder 44, 45 bereits entlüftet sind, können die Kräfte insgesamt zu stark werden. Der Steuerdruck wird außerdem über den ersten Steuereingang 36 in den Zylinderraum 52 geführt, siehe Fig. 3. Je nach Härte und Kennlinie der Druckfeder 59 (und der Druckfeder 66) schaltet die Ventilanordnung 37 aus der Parkstellung gemäß Fig. 5 in die Stellung gemäß Fig. 7. Dadurch wird der erste Anschluss 39 mit dem zweiten Anschluss 40 verbunden und die Federspeicher-Bremszylinder 44, 45 werden mit Druck aus dem Vorratsbehälter 24 belüftet. Im Ergebnis sind nur noch die Betriebsbremsen wirksam. Sobald der Steuerdruck wieder nachlässt, schaltet die Ventilanordnung 37 in die Stellung gemäß Fig. 6 zurück und die Federspeicher-Bremszylinder 44,45 werden wieder entlüftet.

Bei dem anhand der Fig. 7 dargestellten Überlastschutz erfolgt die Belüftung und Entlüftung der Federspeicher-Bremszylinder 44, 45 nicht proportional zur Veränderung des Steuerdrucks. Vielmehr werden die Federspeicher-Bremszylinder 44, 45 in Abhängigkeit von der Überschreitung oder Unterschreitung eines Steuerdruck-Grenzwerts entlüftet oder belüftet. Der Grenzwert beträgt hier 2,5 bar oder mehr. Der Überlastschutz ist auch wirksam ausgehend vom in Fig. 5 (automatische Einbremsung) gezeigten Zustand.

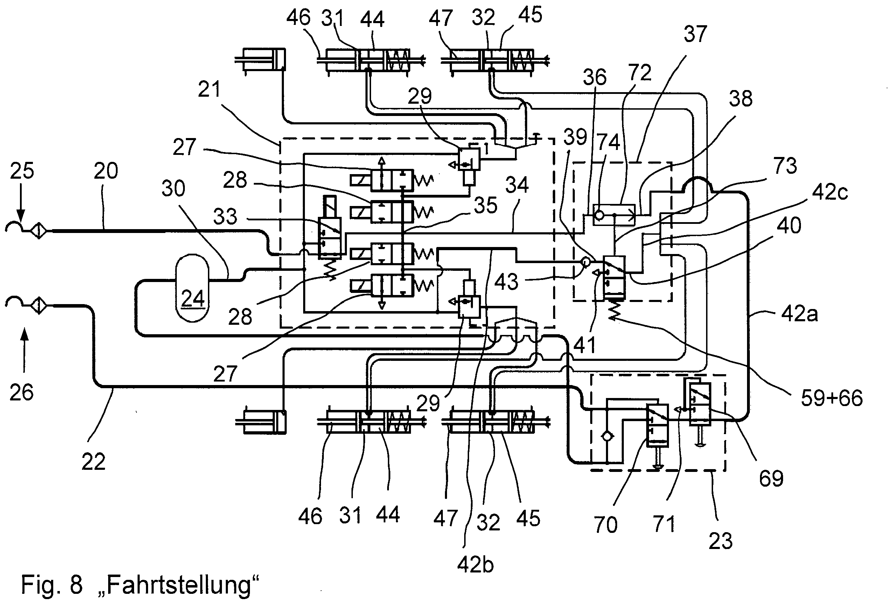

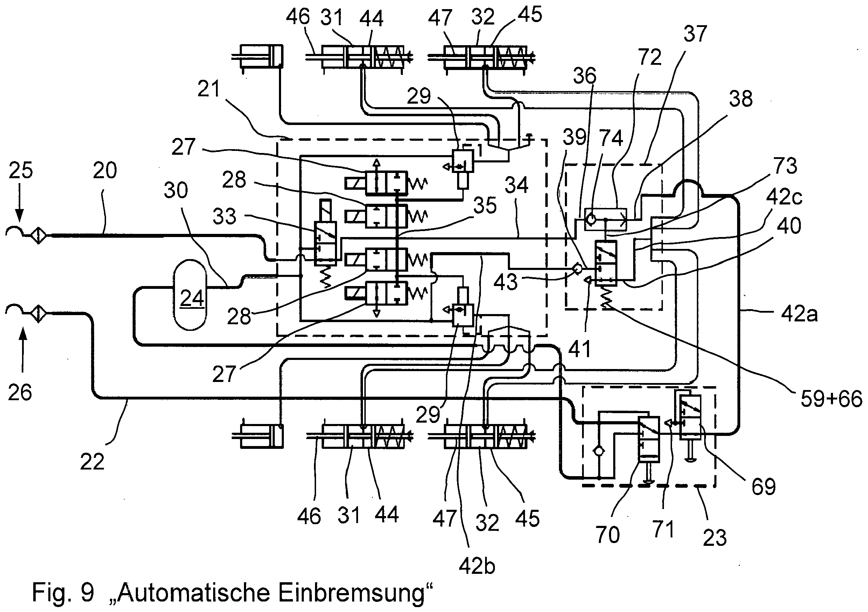

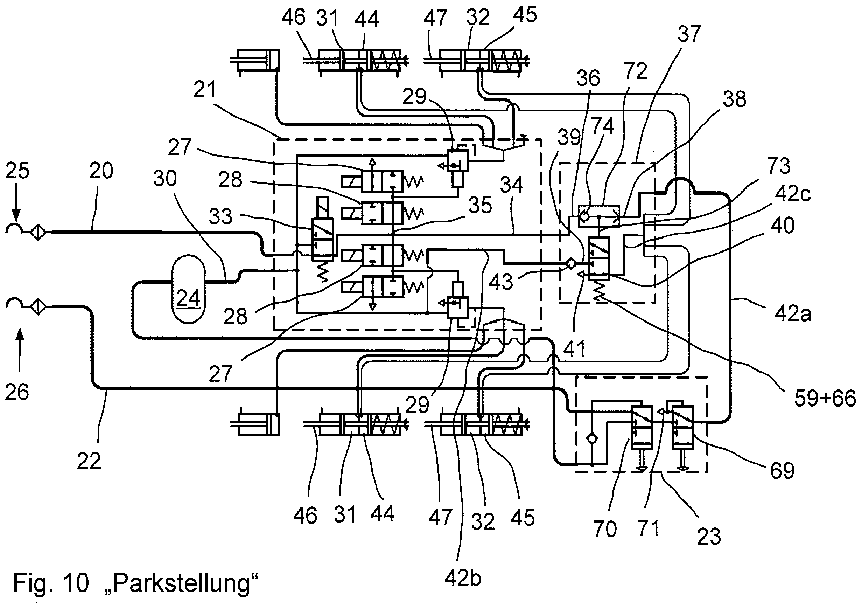

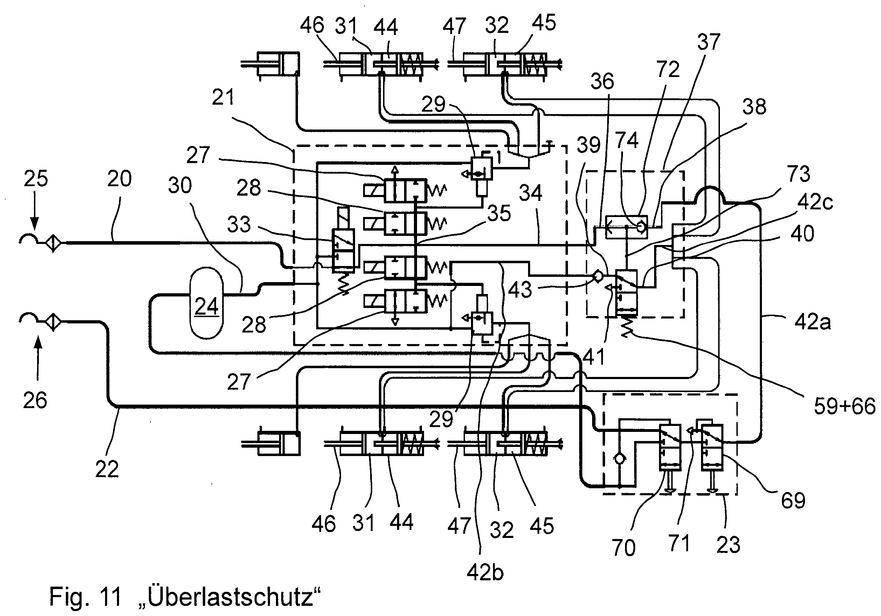

Die Fig. 8 - 11 beziehen sich wie die Fig. 4 - 7 auf die verschiedenen Zustände Fahrtstellung (Fig. 8), automatische Einbremsung (Fig. 9), Parkstellung (Fig. 10) und Überlastschutz (Fig. 11). Im Unterschied zu den Fig. 4 - 7 ist die Ventilanordnung 37 in anderer Weise ausgebildet, nämlich nicht mit einem Doppelkolben-Ventil, sondern mit einem zusätzlichen Select-High-Ventil 72 zur Steuerung der beiden Zustände der Ventilanordnung 37 und der Verbindung der Anschlüsse 39, 40, 41. Das Select-High-Ventil 72 lässt den höheren der an den beiden Steuereingängen 36, 38 anliegenden Druck zu einem dritten Steuereingang 73 durch. In Abhängigkeit von dem hier anliegenden Druck nimmt die Ventilanordnung 37 die zugehörige Schaltstellung ein. Eine Umsetzung in die Praxis ist möglich als 3/2-Wegeventil und durch Abwandlung der Ventileinheit 48 in den Fig. 1 - 3. Der erste Kolben 50 entfällt, der Steuereingang 38 bleibt geschlossen und der Steuereingang 36 wird ersetzt durch den dritten Steuereingang 73. Dieser wird gespeist aus dem Select-High-Ventil 72.

Das Select-High-Ventil 72 enthält zwischen den Steuereingängen 36, 38 eine Rückschlagfunktion, so dass der jeweils anliegende höhere Druck nur in den Steuereingang 73 gelangen und nicht über den Steuereingang mit dem niedrigeren Druck entweichen kann. Das Vorzeichen der Druckdifferenz an den Steuereingängen 36, 38 ist in den Fig. 8 - 11 anhand der Position einer Kugel 74 erkennbar. In Fig. 8 (Fahrtstellung) liegt am Steuereingang 38 Vorratsdruck an, während am Steuereingang 36 ein geringerer oder kein Steuerdruck anliegt. In Fig. 9 (automatische Einbremsung) wird der Steuereingang 38 aus der Fahrtstellung heraus durch Abriss der Vorratsdruckleitung 22 drucklos, während der Steuereingang 36 ohnehin drucklos ist. Die Kugel 74 bleibt vor dem Steuereingang 36, bis auch am Steuereingang 38 kein Druck mehr anliegt.

In Fig. 10 (Parkstellung) ist ebenfalls die Fahrtstellung gemäß Fig. 8 Ausgangspunkt der Überlegungen. In Fahrtstellung liegt am Steuereingang 38 der volle Vorratsdruck an (wie in Fig. 8). Das Fahrzeug wird mittels der Betriebsbremsen durch Regelung des Steuerdrucks gebremst. In Parkstellung werden die Betriebsbremsen grundsätzlich nicht betätigt, d. h. am Steuereingang 36 liegt kein Druck mehr an und zugleich ist der Steuereingang 38 über das Parkventil 69 entlüftet. Bis zur endgültigen Entlüftung des Steuereingangs 38 bleibt die Kugel 74 in der Position gemäß Fig. 10, also links. Die Federspeicher-Bremszylinder 44,45 sind entlüftet, die Federspeicherbremsen halten das Anhängefahrzeug.

Ausgehend von der Parkstellung gemäß Fig. 10 ergibt sich die Stellung gemäß Fig. 11 (Überlastschutz) bei Betätigung der Betriebsbremse während der Parkstellung. Es ist dann am Steuereingang 36 Steuerdruck wirksam. Die Kugel 74 wandert in die rechte Position gemäß Fig. 11 und der Steuerdruck gelangt in den Steuereingang 73 zum Umschalten der Ventilanordnung 37.

Der Überlastschutz wurde bisher nur ausgehend von der Parkstellung gemäß den Fig. 6 und 10 erläutert. Ein Überlastschutz besteht auch ausgehend von einer automatischen Einbremsung (Fig. 5 und 9). Wenn nämlich nach automatischer Einbremsung die Betriebsbremse betätigt wird, gelangt Steuerdruck zum ersten Steuereingang 36. Der zweite Steuereingang 38 kann dabei drucklos bleiben. Die Ventilanordnung 37 schaltet um in die in den Fig. 7 und 11 gezeigte Stellung mit Belüftung der Federspeicher-Bremszylinder 44, 45.

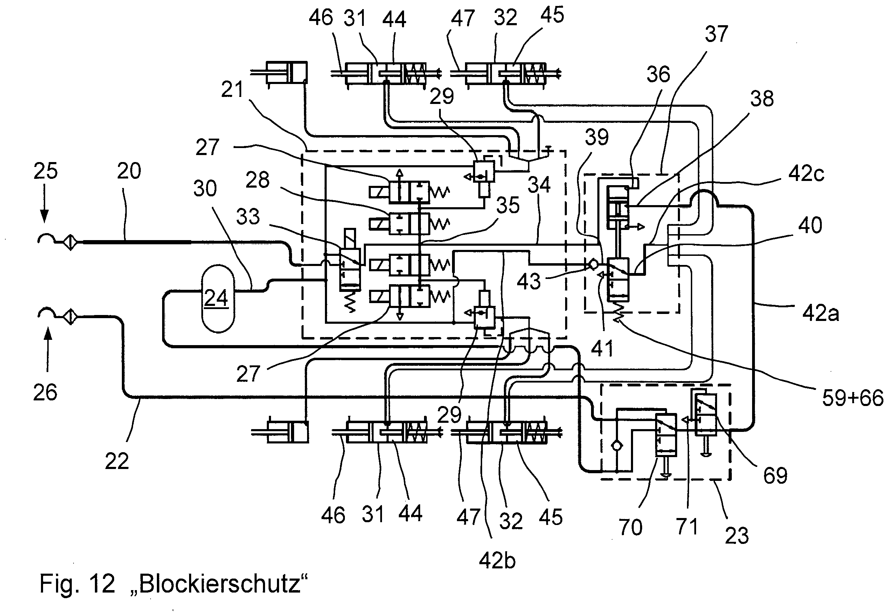

Eine weitere Besonderheit zeigt Fig. 12. Ausgegangen wird von einer automatischen Einbremsung (Fig. 5 und 9). Der zweite Steuereingang 38 ist drucklos durch Abriss der Vorratsdruckleitung 22. Das Anhängefahrzeug wird durch die Federspeicher-Bremszylinder 44, 45 stark abgebremst. Die Räder können blockieren. Die üblicherweise vorhandene Antiblockierregelung für die Betriebsbremse ist nicht wirksam. Um nun eine Antiblockierregelung über das Anhängerbremsmodul 21 zu ermöglichen, schaltet das Redundanzventil 33 aus der Position der Fig. 4 - 11 in die Position gemäß Fig. 12. Dadurch gelangt nicht mehr der Steuerdruck über das Redundanzventil 33 zum ersten Steuereingang 36, sondern über die Leitung 30 Vorratsbehälterdruck aus dem Vorratsbehälter 24. Entsprechend schaltet die Ventilanordnung 37 in die Stellung gemäß Fig. 12, so dass der Vorratsbehälterdruck auch zum zweiten Anschluss 40 gelangt und die Federspeicher-Bremszylinder 44, 45 belüften kann. Das Anhängefahrzeug kann nun über die eigenen Betriebsbremsen (Betriebsbremszylinder 31, 32) mit Vorratsbehälterdruck aus dem Vorratsbehälter 24 eingebremst werden. Dabei ist die im Anhängerbremsmodul 21 üblicherweise vorhandene Antiblockierregelung wirksam.

Der pneumatischen Bremsanlage ist ein elektronisches Bremssystem zugeordnet. Bestandteil des elektronischen Bremssystems ist ein Bremsensteuergerät, welches hier nicht gezeigt ist und welches in das Anhängerbremsmodul 21 integriert ist oder zusätzlich vorhanden sein kann. Das Bremsensteuergerät erhält Zustandsinformationen in an sich bekannter Weise über Sensoren an der pneumatischen Bremsanlage und steuert das Anhängerbremsmodul 21. Beispielsweise werden Steuerdruck und Vorratsdruck überwacht, hier vorzugsweise auch die Stellung der Ventilanordnung 37. Bei plötzlichem Verlust des Drucks in der Vorratsdruckleitung 22 und ausreichendem Druck im Vorratsbehälter 24 kann das Bremsensteuergerät das Redundanzventil 33 umschalten in die Position gemäß Fig. 12 und zugleich eine Notbremsung mit Blockierschutz über das Anhängerbremsmodul 21 mit Regelung der Ventile 27, 28 veranlassen. Nur wenn der Vorratsbehälter 24 nicht mehr ausreichenden Druck aufweist, wird das Redundanzventil 33 nicht zum Umschalten angesteuert, so dass eine automatische Bremsung durch die Federspeicher-Bremszylinder 44, 45 stattfindet.

## Patentansprüche

1. Ventilanordnung (37) zur Belüftung und/oder Entlüftung von Federspeicher-Bremszylindern (44, 45) in einem Anhängefahrzeug mit pneumatischer Bremsanlage, mit einem ersten Anschluss (39) für eine mit einem Vorratsbehälter (24) des Anhängefahrzeugs verbundene Leitung, mit einem zweiten Anschluss (40) für eine zu den Federspeicher-Bremszylindern (44, 45) führende Leitung, und mit einem ersten pneumatischen Steuereingang (36), wobei in Abhängigkeit vom Druck am ersten Steuereingang (36) und unabhängig vom Druck in Betriebsbremszylindern (31, 32) der erste Anschluss (39) mit dem zweiten Anschluss (40) verbindbar ist,
wobei der erste Steuereingang (36) an eine mit einem Steueranschluss des Anhängefahrzeugs verbundene Leitung (20) angeschlossen ist.

2. Ventilanordnung nach Anspruch 1, **dadurch gekennzeichnet, dass** der erste Anschluss (39) mit dem zweiten Anschluss (40) verbunden ist, wenn in der an den ersten Steuereingang (36) angeschlossenen Leitung (20) ein Druck oberhalb eines Grenzwertes vorliegt.

3. Ventilanordnung nach Anspruch 1 oder 2, **gekennzeichnet durch** einen dritten Anschluss (41) als Entlüftung, wobei der zweite Anschluss (40) mit dem dritten Anschluss (41) oder mit dem ersten Anschluss (39) verbindbar ist.

4. Ventilanordnung nach Anspruch 1 oder einem der weiteren Ansprüche, **gekennzeichnet durch** einen zweiten pneumatischen Steuereingang (38), welcher an eine mit einem Versorgungsanschluss verbundene Leitung (42a) anzuschließen ist, wobei auch in Abhängigkeit vom Druck am zweiten Steuereingang (38) der erste Anschluss (39) mit dem zweiten Anschluss (40) verbindbar ist.

5. Ventilanordnung nach Anspruch 4, **dadurch gekennzeichnet, dass** der erste Anschluss (39) mit dem zweiten Anschluss (40) verbunden ist, wenn wenigstens einer der beiden Steuereingänge (36,38) mit einem Druck oberhalb eines Grenzwerts beaufschlagt ist.

6. Ventilanordnung nach Anspruch 1 oder einem der weiteren Ansprüche, **dadurch gekennzeichnet, dass** die Ventilanordnung (37) ein Mehr-Wege-Ventil mit mindestens zwei Schaltstellungen aufweist und dass erster Steuereingang (36), erster Anschluss (39) und zweiter Anschluss (40) dem Mehr-Wege-Ventil zugeordnet sind.

7. Ventilanordnung nach Anspruch 6, **dadurch gekennzeichnet, dass** ein dritter Anschluss (41) als Entlüftungsanschluss dem Mehr-Wege-Ventil zugeordnet ist.

8. Ventilanordnung nach Anspruch 6 oder 7, **dadurch gekennzeichnet, dass** ein zweiter Steuereingang (38) dem Mehr-Wege-Ventil zugeordnet ist, wobei der zweite Steuereingang (38) vorzugsweise an eine mit einem Versorgungsanschluss verbundene Leitung (42) angeschlossen ist.

9. Ventilanordnung nach Anspruch 1, **gekennzeichnet durch** folgende Merkmale:
a) am ersten Steuereingang (36) liegen entweder ein Druck aus der mit vom Steueranschluss kommenden Leitung (20) oder ein Druck aus der vom Vorratsbehälter (24) kommenden Leitung (30) an,
b) an einem zweiten Steuereingang (38) liegt ein Vorratsdruck aus einer Vorratsdruckleitung (22) an,
c) am ersten Anschluss (39) liegt der Druck aus der vom Vorratsbehälter (24) kommenden Leitung (30) an,
d) am zweiten Anschluss (40) liegt der Druck aus einer zu den Federspeicher-Bremszylindern (44,45) führenden Leitung (42c) an,
e) ein dritter Anschluss (41) ist zum Entlüften vorgesehen,
f) die Ventilanordnung (37) ist derart konfiguriert, dass
- bei Überschreitung eines Grenzwerts des Drucks am zweiten Steuereingang (38) und Unterschreitung eines Grenzwerts des Drucks am ersten Steuereingang (36) der erste Anschluss (39) mit dem zweiten Anschluss (40) verbunden ist (Fahrtstellung),
- bei Unterschreitung eines definierten Grenzwerts des Drucks am ersten Steuereingang (36) und Unterschreitung eines definierten Grenzwerts des Drucks am zweiten Steuereingang (38) der zweite Anschluss (40) mit dem dritten Anschluss (41) verbunden ist und der erste Anschluss (39) gesperrt ist (automatische Einbremsung und Parkstellung),
- bei Überschreitung eines definierten Grenzwerts des Drucks am ersten Steuereingang (36) und insbesondere Unterschreitung eines definierten Grenzwerts des Drucks am zweiten Steuereingang (38) der erste Anschluss (39) mit dem zweiten Anschluss (40) verbunden ist (Überlastschutz).

10. Ventilanordnung nach Anspruch 1 oder einem der weiteren Ansprüche, **gekennzeichnet durch** folgende Merkmale:
a) ein Park-/Löseventil (23),
b) die Ventilanordnung (37) beinhaltet ein Mehr-Wege-Ventil mit mindestens zwei Schaltstellungen, wobei die Ventilanordnung (37) die Federspeicher-Bremszylinder (44,45) in einer ersten Schaltstellung entlüftet und in einer zweiten Schaltstellung über ein Rückschlagventil (43) die Leitung (30) zum Vorratsbehälter (24) mit den Federspeicher-Bremszylindern (44,45) verbindet,
c) der erste Steuereingang (36) ist über ein weiteres Schaltelement mit der Leitung (20) zum Steueranschluss oder mit der Leitung (30) zum Vorratsbehälter (24) verbindbar,
d) ein zweiter Steuereingang (38) ist über das Park-Löseventil (23) mit einer Vorratsdruckleitung (22) zu einem Versorgungsanschluss oder mit einer Leitung zum Vorratsbehälter (24) oder mit einer Entlüftung (71) verbindbar,
e) das Mehr-Wege-Ventil schaltet in die zweite Schaltstellung, wenn zumindest einer der Steuereingänge (36, 38) einen Druck führt, der einen Grenzwert überschreitet,
f) das Mehr-Wege-Ventil schaltet in die erste Schaltstellung, wenn beide Steuereingänge (36, 38) Drücke führen, die Grenzwerte unterschreiten.

11. Ventilanordnung nach Anspruch 10, **dadurch gekennzeichnet, dass** das weitere Schaltelement Teil eines Anhängerbremsmoduls (21) ist, insbesondere ein Redundanzventil (33) ist.

12. Ventilanordnung nach Anspruch 1 oder einem der weiteren Ansprüche, **dadurch gekennzeichnet, dass** der erste Steuereingang (36) zu einem Select-High-Ventil (72) mit zwei oder mehr Steuereingängen (36, 38) gehört.

13. Ventilanordnung nach Anspruch 1 oder einem der weiteren Ansprüche, **gekennzeichnet durch** eine Ventileinheit (48) zur Belüftung der Federspeicher-Bremszylinder (44,45), mit einem ersten Kolben (50), einem ersten Zylinderraum (52), einem zweiten Kolben (51) und einem zweiten Zylinderraum (54),
wobei der erste Zylinderraum (52) den ersten Steuereingang (36) aufweist, wobei die Kolben (50, 51) koaxial zueinander gehalten und bewegbar sind, wobei der zweite Zylinderraum (54) zwischen den beiden Kolben (50, 51) vorgesehen ist und einen zweiten Steuereingang (38) für den Druck aus einer mit einem Versorgungsanschluss verbundenen Leitung (42a) aufweist,
und wobei einer der Kolben (50, 51) einen Fortsatz (53) aufweist, welcher in den zweiten Zylinderraum (54) hineinragt.

14. Ventilanordnung nach Anspruch 1 oder einem der vorherigen Ansprüche, **dadurch gekennzeichnet, dass** die Ventilanordnung ein Gehäuse aufweist, welches aus einem metallischen Werkstoff, wie z. B. Aluminium, gebildet ist.

15. Ventilanordnung nach Anspruch 3 oder einem der vorherigen Ansprüche, **dadurch gekennzeichnet, dass** der dritte Anschluss (41) über ein Mittel zur Geräuschdämpfung mit der Atmosphäre verbunden ist.

16. Ventilanordnung nach Anspruch 3 oder einem der vorherigen Ansprüche, **dadurch gekennzeichnet, dass** der dritte Anschluss (41) mit einem Entlüftungsanschluss eines Relaisventils (29) verbunden ist.

17. Ventilanordnung nach Anspruch 3 oder einem der vorherigen Ansprüche, **dadurch gekennzeichnet, dass** in Abhängigkeit vom Druck am ersten Steuereingang (36) und unabhängig vom Druck in den Betriebsbremszylindern (31, 32) der zweite Anschluss (40) mit dem dritten Anschluss (41) verbindbar ist.

18. Pneumatische Bremsanlage für ein Anhängefahrzeug, mit einer Ventilanordnung (37) nach einem der Ansprüche 1 - 13.

19. Anhängefahrzeug mit einer pneumatischen Bremsanlage nach Anspruch 18.

20. Verfahren zum Betreiben einer pneumatischen Bremsanlage für ein Anhängefahrzeug gemäß Anspruch 19, wobei die Bremsanlage Steueranschluss, Versorgungsanschluss, Betriebsbremsen, Federspeicherbremsen, einen Vorratsbehälter (24) und eine Ventilanordnung (37) mit pneumatischem Steuereingang (36) aufweist,
und wobei in Abhängigkeit vom Druck am Steuereingang (36) und unabhängig vom Druck in Betriebsbremszylindern (31, 32) Federspeicher-Bremszylinder (44, 45) aus dem Vorratsbehälter (24) belüftet werden,
wobei der Druck am Steuereingang (36) vom Druck am Steueranschluss abgeleitet ist.

## Claims

1. A valve assembly (37) for admitting air into and/or releasing air from spring-loaded brake cylinders (44, 45) in a trailer vehicle with a pneumatic brake system, comprising a first connection (39) for a line connected to a storage container (24) of the trailer vehicle, a second connection (40) for a line which leads to the spring-loaded brake cylinders (44, 45), and a first pneumatic control inlet (36), wherein the first connection (39) can be connected to the second connection (40) depending on the pressure at the first control inlet (36) and regardless of the pressure in the service brake cylinders (31, 32),
wherein the first control inlet (36) is connected to a line (20) connected to a control connection of the trailer vehicle.

2. The valve assembly according to claim 1, **characterized in that** the first connection (39) is connected to the second connection (40) when a pressure is above a limit value in the line (20) connected to the first control inlet (36) .

3. The valve assembly according to claim 1 or 2, **characterized by** a third connection (41) as ventilation, wherein the second connection (40) is connectable to the third connection (41) or to the first connection (39).

4. The valve assembly according to claim 1 or any of the further claims, **characterized by** a second pneumatic control inlet (38), which is to be connected to a line (42a) connected to a supply connection, wherein the first connection (39) can also be connected to the second connection (40) depending on the pressure at the second control inlet (38).

5. The valve assembly according to claim 4, **characterized in that** the first connection (39) is connected to the second connection (40) when at least one of the two control inlets (36, 38) is supplied with a pressure above a limit value.

6. The valve assembly according to claim 1 or any of the further claims, **characterized in that** the valve assembly (37) is a multi-way valve with at least two switching positions and that the first control inlet (36), the first connection (39) and the second connection (40) are assigned to the multi-way valve.

7. The valve assembly according to claim 6, **characterized in that** a third connection (41) is assigned to the multi-way valve as a vent connection.

8. The valve assembly according to claim 6 or 7, **characterized in that** a second control inlet (38) is assigned to the multi-way valve, wherein the second control inlet (38) is preferably connected to a line (42) connected to a supply connection.

9. The valve assembly according to claim 1, **characterized by** the following features:
a) there is either a pressure from the line (20) coming from the control connection on the first control inlet (36) or a pressure from the line (30) coming from the storage container (24),
b) there is a storage pressure from a storage pressure line (22) on a second control inlet (38),
c) there is a pressure from the line (30) coming from the storage container (24) on the first connection (39),
d) there is a pressure from a line (42c) which leads to the spring-loaded brake cylinders (44, 45) on the second connection (40),
e) a third connection (41) is provided for releasing air,
f) the valve assembly (37) is configured such that
- upon exceeding a limit value of the pressure at the second control inlet (38) and falling below a limit value of the pressure at the first control inlet (36) the first connection (39) is connected to the second connection (40) (drive position),
- upon falling below a defined limit value of the pressure at the first control inlet (36) and falling below a defined limit value of the pressure at the second control inlet (38) the second connection (40) is connected to the third connection (41) and the first connection (39) is locked (automatic braking and park position),
- upon exceeding a defined limit value of the pressure at the first control inlet (36) and in particular falling below a defined limit value of the pressure at the second control inlet (38) the first connection (39) is connected to the second connection (40) (overload protection).

10. The valve assembly according to claim 1 or any of the further claims, **characterized by** the following features:
a) a parking/release valve (23),
b) the valve assembly (37) contains a multi-way valve with at least two switching positions, wherein the valve assembly (37) releases the air from the spring-loaded brake cylinders (44, 45) in a first switching position and in a second switching position connects the line (30) for the storage container (24) to the spring-loaded brake cylinders (44, 45) via a check valve (43),
c) the first control inlet (36) is connectable to the line (20) for the control connection or to the line (30) for the storage container (24) via a further switching element,
d) a second control inlet (38) is connected to a storage line (22) for a supply connection or to a line for the storage container (24) or to a vent (71) via the park-release valve (23),
e) the multi-way valve switches to the second switching position when at least one of the control inlets (36, 38) leads to a pressure which exceeds a limit value,
f) the multi-way valve switches to the first switching position when both control inlets (36, 38) lead to pressures which exceed the limit values.

11. The valve assembly according to claim 10, **characterized in that** the further switching element is part of a trailer brake module (21), in particular a redundancy valve (33) .

12. The valve assembly according to claim 1 or any of the further claims, **characterized in that** the first control inlet (36) belongs to a select-high valve (72) with two or more control inlets (36, 38).

13. The valve assembly according to claim 1 or any of the further claims, **characterized by** a valve unit (48) for admitting air into the spring-loaded brake cylinders (44, 45) with a first piston (50), a first cylinder chamber (52), a second piston (51) and a second cylinder chamber (54),
wherein the first cylinder chamber (52) comprises the first control inlet (36),
wherein the pistons (50, 51) are held coaxially to each other and are moveable,
wherein the second cylinder chamber (54) is provided between the two pistons (50, 51) and comprises a second control inlet (38) for the pressure from a line (42a) connected to a supply connection,
and wherein one of the pistons (50, 51) comprises a projection (53), which protrudes into the second cylinder chamber (54).

14. The valve assembly according to claim 1 or any of the preceding claims, **characterized in that** the valve assembly comprises a housing which is formed from a metallic material, such as e.g., aluminum.

15. The valve assembly according to claim 3 or any of the preceding claims, **characterized in that** the third connection (41) is connected to the atmosphere via a means for sound-proofing.

16. The valve assembly according to claim 3 or any of the preceding claims, **characterized in that** the third connection (41) is connected to a ventilation connection of a relay valve (29) .

17. The valve assembly according to claim 3 or any of the preceding claims, **characterized in that** the second connection (40) is connectable to the third connection (41) depending on the pressure at the first control inlet (36) and regardless of the pressure in the service brake cylinders (31, 32).

18. A pneumatic brake system for a trailer vehicle, having a valve assembly (37) according to any of claims 1 to 13.

19. A trailer vehicle having a pneumatic brake system according to claim 18.

20. A method for operating a pneumatic brake system for a trailer vehicle according to claim 19, wherein the brake system comprises a control connection, supply connection, service brakes, spring-loaded brakes, a storage container (24) and a valve assembly (37) having a pneumatic control inlet (36),
and wherein depending on the pressure at the control inlet (36) and regardless of the pressure in the service brake cylinders (31, 32) air is admitted into the spring-loaded brake cylinders (44, 45) from the storage container (24),
wherein the pressure at the control inlet (36) is diverted from the pressure at the control connection.

## Revendications

1. Agencement de valve (37) destiné à ventiler et/ou purger des cylindres de frein à accumulateur élastique (44, 45) dans un véhicule tracté avec un dispositif de freinage pneumatique, avec un premier raccord (39) pour une conduite reliée à un réservoir de stockage (24) du véhicule tracté, avec un deuxième raccord (40) pour une conduite qui mène vers les cylindres de frein à accumulateur élastique (44, 45), et avec une première entrée de commande (36) pneumatique, dans lequel, en fonction de la pression contre la première entrée de commande (36) et indépendamment de la pression dans des cylindres de frein de service (31, 32), le premier raccord (39) peut être relié au deuxième raccord (40),
dans lequel la première entrée de commande (36) est raccordée à une conduite (20) reliée à un raccord de commande du véhicule tracté.

2. Agencement de valve selon la revendication 1, **caractérisé en ce que** le premier raccord (39) est relié au deuxième raccord (40) lorsqu'une pression supérieure à une valeur limite se présente dans la conduite (20) raccordée à la première entrée de commande (36).

3. Agencement de valve selon la revendication 1 ou 2, **caractérisé par** un troisième raccord (41) en tant que purge, dans lequel le deuxième raccord (40) peut être relié au troisième raccord (41) ou au premier raccord (39).

4. Agencement de valve selon la revendication 1 ou l'une des autres revendications, **caractérisé par** une seconde entrée de commande (38) pneumatique, laquelle est à raccorder à une conduite (42a) reliée à un raccord d'alimentation, dans lequel, également en fonction de la pression contre la seconde entrée de commande (38), le premier raccord (39) peut être relié au deuxième raccord (40).

5. Agencement de valve selon la revendication 4, **caractérisé en ce que** le premier raccord (39) est relié au deuxième raccord (40) lorsqu'au moins l'une des deux entrées de commande (36, 38) est sollicitée avec une pression supérieure à une valeur limite.

6. Agencement de valve selon la revendication 1 ou l'une des autres revendications, **caractérisé en ce que** l'agencement de valve (37) présente un distributeur à plusieurs voies avec au moins deux positions de commutation et **en ce que** la première entrée de commande (36), le premier raccord (39) et le deuxième raccord (40) sont attribués au distributeur à plusieurs voies.

7. Agencement de valve selon la revendication 6, **caractérisé en ce qu'**un troisième raccord (41) est attribué au distributeur à plusieurs voies en tant que raccord de purge.

8. Agencement de valve selon la revendication 6 ou 7, **caractérisé en ce qu'**une seconde entrée de commande (38) est attribuée au distributeur à plusieurs voies, dans lequel la seconde entrée de commande (38) est de préférence raccordée à une conduite (42) reliée à un raccord d'alimentation.

9. Agencement de valve selon la revendication 1, **caractérisé par** les caractéristiques suivantes :
a) contre la première entrée de commande (36) s'exercent soit une pression depuis la conduite (20) qui vient du raccord de commande soit une pression depuis la conduite (30) qui vient du réservoir de stockage (24),
b) contre une seconde entrée de commande (38) s'exerce une pression d'alimentation depuis une conduite de pression d'alimentation (22),
c) contre le premier raccord (39) s'exerce la pression depuis la conduite (30) qui vient du réservoir de stockage (24),
d) contre le deuxième raccord (40) s'exerce la pression depuis une conduite (42c) qui mène vers les cylindres de frein à accumulateur élastique (44, 45),
e) un troisième raccord (41) est prévu pour la purge,
f) l'agencement de valve (37) est configuré de sorte que
- lors du dépassement vers le haut d'une valeur limite de la pression contre la seconde entrée de commande (38) et du dépassement vers le bas d'une valeur limite de la pression contre la première entrée de commande (36), le premier raccord (39) est relié au deuxième raccord (40) (position de roulage),
- lors du dépassement vers le bas d'une valeur limite définie de la pression contre la première entrée de commande (36) et du dépassement vers le bas d'une valeur limite définie de la pression contre la seconde entrée de commande (38), le deuxième raccord (40) est relié au troisième raccord (41) et le premier raccord (39) est bloqué (freinage automatique et position de stationnement),
- lors du dépassement vers le haut d'une valeur limite définie de la pression contre la première entrée de commande (36) et en particulier du dépassement vers le bas d'une valeur limite définie de la pression contre la seconde entrée de commande (38), le premier raccord (39) est relié au deuxième raccord (40) (protection contre la surcharge).

10. Agencement de valve selon la revendication 1 ou l'une des autres revendications, **caractérisé par** les caractéristiques suivantes :
a) une valve de stationnement/desserrage (23),
b) l'agencement de valve (37) contient un distributeur à plusieurs voies avec au moins deux positions de commutation, dans lequel l'agencement de valve (37) purge les cylindres de frein à accumulateur élastique (44, 45) dans une première position de commutation et, dans une seconde position de commutation, relie la conduite (30) vers le réservoir de stockage (24) aux cylindres de frein à accumulateur élastique (44, 45) via un clapet de non-retour (43),
c) la première entrée de commande (36) peut être reliée à la conduite (20) vers le raccord de commande ou à la conduite (30) vers le réservoir de stockage (24) via un autre élément de commutation,
d) une seconde entrée de commande (38) peut être reliée à une conduite de pression d'alimentation (22) vers un raccord d'alimentation ou à une conduite vers le réservoir de stockage (24) ou à une purge (71) via la valve de stationnement/desserrage (23),
e)°le distributeur à plusieurs voies passe dans la seconde position de commutation lorsqu'au moins l'une des deux entrées de commande (36, 38) provoque une pression qui dépasse vers le haut une valeur limite,
f) le distributeur à plusieurs voies passe dans la première position de commutation lorsque les deux entrées de commande (36, 38) provoquent des pressions qui dépassent vers le bas des valeurs limites.

11. Agencement de valve selon la revendication 10, **caractérisé en ce que** l'autre élément de commutation fait partie d'un module de frein de remorque (21), en particulier est une valve de redondance (33).

12. Agencement de valve selon la revendication 1 ou l'une des autres revendications, **caractérisé en ce que** la première entrée de commande (36) appartient à une valve à sélection haute (72) avec deux ou plusieurs entrées de commande (36, 38) .

13. Agencement de valve selon la revendication 1 ou l'une des autres revendications, **caractérisé par** une unité de valve (48) destinée à ventiler les cylindres de frein à accumulateur élastique (44, 45), avec un premier piston (50), une première chambre de cylindre (52), un second piston (51) et une seconde chambre de cylindre (54),
dans lequel la première chambre de cylindre (52) présente la première entrée de commande (36),
dans lequel les pistons (50, 51) sont maintenus et peuvent être déplacés de façon mutuellement coaxiale,
dans lequel la seconde chambre de cylindre (54) est prévue entre les deux pistons (50, 51) et présente une seconde entrée de commande (38) pour la pression depuis une conduite (42a) reliée à un raccord d'alimentation,
et dans lequel l'un des pistons (50, 51) présente un prolongement (53), lequel pénètre dans la seconde chambre de cylindre (54).

14. Agencement de valve selon la revendication 1 ou l'une des revendications précédentes, **caractérisé en ce que** l'agencement de valve présente un logement, lequel est conçu dans un matériau métallique, comme par exemple de l'aluminium.

15. Agencement de valve selon la revendication 3 ou l'une des revendications précédentes, **caractérisé en ce que** le troisième raccord (41) est relié à l'atmosphère via un moyen pour amortir le bruit.

16. Agencement de valve selon la revendication 3 ou l'une des revendications précédentes, **caractérisé en ce que** le troisième raccord (41) est relié à un raccord de purge d'une valve-relais (29).

17. Agencement de valve selon la revendication 3 ou l'une des revendications précédentes, **caractérisé en ce que**, en fonction de la pression contre la première entrée de commande (36) et indépendamment de la pression dans les cylindres de frein de service (31, 32), le deuxième raccord (40) peut être relié au troisième raccord (41).

18. Dispositif de freinage pneumatique pour un véhicule tracté, avec un agencement de valve (37) selon l'une des revendications 1-13.

19. Véhicule tracté avec un dispositif de freinage pneumatique selon la revendication 18.

20. Procédé destiné à exploiter un dispositif de freinage pneumatique pour un véhicule tracté selon la revendication 19, dans lequel le dispositif de freinage présente un raccord de commande, un raccord d'alimentation, des freins de service, des frein à accumulateur élastique, un réservoir de stockage (24) et un agencement de valve (37) avec une première entrée de commande (36),
et dans lequel, en fonction de la pression contre la première entrée de commande (36) et indépendamment de la pression dans des cylindres de frein de service (31, 32), des cylindres de frein à accumulateur élastique (44, 45) sont ventilés depuis le réservoir de stockage (24),
dans lequel la pression contre la première entrée de commande (36) dérive de la pression contre le raccord de commande.
